(19) Europäisches Patentamt / European Patent Office / Office européen des brevets

(11) **EP 2 881 448 B1**

(12) **EUROPEAN PATENT SPECIFICATION**

(45) Date of publication and mention
of the grant of the patent:
**26.04.2017 Bulletin 2017/17**

(21) Application number: **12882149.3**

(22) Date of filing: **31.07.2012**

(51) Int Cl.:
*C09K 11/64* *(2006.01)*   *C09K 11/02* *(2006.01)*

(86) International application number:
**PCT/CN2012/079462**

(87) International publication number:
**WO 2014/019153 (06.02.2014 Gazette 2014/06)**

(54) **ZINC ALUMINATE MATERIAL AND METHOD FOR PREPARING SAME**

ZINKALUMINATMATERIAL UND VERFAHREN ZUR HERSTELLUNG DAVON

MATÉRIAU D'ALUMINATE DE ZINC ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.06.2015 Bulletin 2015/24**

(73) Proprietors:
• **Ocean's King Lighting Science & Technology
Co., Ltd.
Guangdong 518054 (CN)**
• **Shenzhen Ocean's King Lighting
Engineering Co. Ltd.
Guangdong 518054 (CN)**

(72) Inventors:
• **ZHOU, Mingjie
Shenzhen
Guangdong 518054 (CN)**
• **WANG, Rong
Shenzhen
Guangdong 518054 (CN)**
• **CHEN, Guitang
Shenzhen
Guangdong 518054 (CN)**

(74) Representative: **Cabinet Laurent & Charras
Le Contemporain
50 Chemin de la Bruyère
69574 Dardilly Cedex (FR)**

(56) References cited:
**WO-A1-2009/059677    WO-A1-2011/156955
CN-A- 1 861 738      CN-A- 101 525 538
CN-A- 102 212 360     CN-A- 102 234 512**

**Description**

**FIELD OF THE INVENTION**

The present disclosure relates to luminescent materials, and more particularly relates to a zinc aluminate fluorescent material and method for preparing the same.

**BACKGROUND OF THE INVENTION**

Field emission display (FED) is a flat panel display technology having a great development potential. While the operating voltage of field emission display device is lower than that of the cathode ray tube (CRT), the operating current density of FED is relatively larger, e.g., about 10 to 100$\mu$A·cm$^{-2}$. Accordingly, the fluorescent material for the field emission display requires a higher demand, such as better chromaticity, higher luminous efficiency at low voltage, and no brightness saturation phenomena at high current densities.

Currently, the study on FED mainly focuses on two aspects: one is to use and modify the existing fluorescent material for CRT; another is to search for new fluorescent material. The commercial available fluorescent material for CRT is usually based on sulfide, however, when it is used for manufacturing FED, sulfur may reacts with trace molybdenum, silicon or germanium contained in the cathode due to the instability of sulfides, which weakens the electron emission, resulting a weak FED luminous intensity. CN 102234512 discloses modified luminescent materials in the form of a fluorescent powder with aluminum doped zinc oxide coating.

**SUMMARY OF THE INVENTION**

Accordingly, in order to address the problem of low emission intensity of existing fluorescent material, it is necessary to provide a zinc aluminate fluorescent material having a higher emission intensity and method for preparing the same.

A zinc aluminate fluorescent material has a formula:

$$Zn_{1-x}Al_2O_4:Mn_x@Al_2O_3@M_y;$$

wherein M is at least one metal nanoparticles selected from the group consisting of Ag, Au, Pt, Pd, and Cu;

$$0<x\leq0.1;$$

y is a mole ratio of M to Al, and $0<y\leq1\times10^{-2}$;
@ represents coating, in the zinc aluminate fluorescent material, M serves as a core, $Al_2O_3$ serves as an intermediate layer shell, and $Zn_{1-x}Al_2O_4:Mn_x$ serves as an outer layer shell.

In one embodiment, $0.001\leq x\leq0.005$.
In one embodiment, $1\times10^{-5}\leq y\leq5\times10^{-3}$.
A method of preparing a zinc aluminate fluorescent material includes the following steps:

preparing a sol containing M, wherein M is at least one metal nanoparticles selected from the group consisting of Ag, Au, Pt, Pd, and Cu;
surface-treating the sol containing M, adding a solution containing $Al^{3+}$ ion, stirring and adding a precipitating agent, reacting at a temperature of 0°C to 100°C to produce a precipitate, filtrating the precipitate, then washing, drying and calcining the precipitate to obtain $Al_2O_3@M$ powder which coating M;
mixing a Zn compound, an Mn compound, and the $Al_2O_3@M$ powder according to a stoichiometric ratio of formula of $Zn_{1-x}Al_2O_4:Mn_x@Al_2O_3@M_y$ to obtain a mixture; and
grinding the mixture, heating the mixture, reducing the mixture, cooling and further grinding the mixture to obtain the zinc aluminate fluorescent material having the formula: $Zn_{1-x}Al_2O_4:Mn_x@Al_2O_3@M_y$;
wherein $0<x\leq0.1$, y is a mole ratio of M to Al, and $0<y\leq1\times10^{-2}$; @ represents coating, in the zinc aluminate fluorescent material, M serves as a core, $Al_2O_3$ serves as an intermediate layer shell, and $Zn_{1-x}Al_2O_4:Mn_x$ serves as an outer layer shell.

In one embodiment, the step of preparing the sol containing M includes:

mixing a salt solution of at least one metal nanoparticles selected from the group consisting of Ag, Au, Pt, Pd, and Cu, with an additive and a reductant, and reacting for 10 to 45 minutes to obtain the sol containing M;

wherein the concentration of the salt solution of at least one metal selected from the group consisting of Ag, Au, Pt, Pd, and Cu ranges from $1 \times 10^{-3}$ mol/L to $5 \times 10^{-2}$ mol/L;

the additive is at least one selected from the group consisting of polyvinylpyrrolidone, sodium citrate, cetyl trimethyl ammonium bromide, sodium lauryl sulfate, and sodium dodecyl sulfate;

the concentration of the additive in the sol containing M ranges from $1 \times 10^{-4}$ g/mL to $5 \times 10^{-2}$ g/mL;

the reductant is at least one selected from the group consisting of hydrazine hydrate, ascorbic acid, sodium citrate, and sodium borohydride;

a mole ratio between the reductant and metal ion of the salt solution of at least one metal selected from the group consisting of Ag, Au, Pt, Pd, and Cu ranges from 3.6:1 to 18:1.

In one embodiment, the step of surface-treating the sol containing M includes: adding the sol containing M into an aqueous solution of polyvinyl pyrrolidone having a concentration of 0.005g/mL to 0.01g/mL and stirring for 12 to 24 hours.

In one embodiment, the method further includes a step of adding a surfactant after stirring and before adding the precipitating agent.

In one embodiment, the solution containing $Al^{3+}$ ion is selected from the group consisting of aluminum sulfate solution, aluminum nitrate solution, and aluminum chloride solution; the surfactant is selected from the group consisting of polyethylene glycol, ethylene glycol, isopropyl alcohol, and polyvinyl alcohol; the precipitating agent is selected from the group consisting of ammonium bicarbonate, ammonia, ammonium carbonate, and urea.

In one embodiment, the method further includes a step of aging the precipitate for 1 to 8 hours before filtrating the precipitate.

In one embodiment, the step of calcining the precipitate comprises: calcining the precipitate at a temperature of 500°C to 1200°C for 1 to 8 hours.

In one embodiment, the step of heating the mixture comprises: calcining the mixture at a temperature of 800°C to 1400°C for 2 to 15 hours.

In one embodiment, the step of reducing the mixture comprises: heating the mixture under a mixed reducing atmosphere of nitrogen and hydrogen, a carbon reducing atmosphere or a hydrogen reducing atmosphere at a temperature of 1000°C to 1400°C for 0.5 to 6 hours.

In the zinc aluminate fluorescent material, a core-shell structure is formed by coating at least one metal nanoparticles selected from the group consisting of Ag, Au, Pt, Pd, and Cu, since metal nanoparticles can improve the internal quantum efficiency of the fluorescent material, the zinc aluminate fluorescent material exhibits a higher luminous intensity.

## BRIEF DESCRIPTION OF THE DRAWINGS

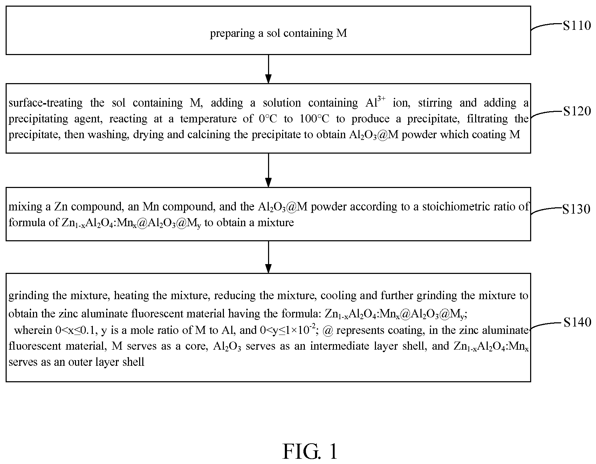

FIG. 1 is a flow chart of a method of preparing a zinc aluminate fluorescent material in accordance with one embodiment;

FIG. 2 is a graphical representation of cathodoluminescence spectrum under a voltage of 1.5kV of the zinc aluminate fluorescent material of $Zn_{0.992}Al_2O_4$:Mn0.008@$Al_2O_3$@$Ag_{2.5\times10^{-4}}$ prepared in accordance with Example 3, and the luminescent material of $Zn0._{992}Al_2O_4$:$Mn_{0.008}$@$Al_2O_3$ without coating metal nanoparticles.

## DETAILED DESCRIPTION OF THE EMBODIMENTS

Reference will now be made to the drawings to describe, in detail, embodiments of the present zinc aluminate fluorescent material and method for preparing the same.

A zinc aluminate fluorescent material is represented by a formula:

$$Zn_{1-x}Al_2O_4:Mn_x@Al_2O_3@M_y;$$

wherein M is at least one metal nanoparticles selected from the group consisting of Ag, Au, Pt, Pd, and Cu; $0<x\leq0.1$; preferably $0.001 \leq x\leq0.005$.

y is a mole ratio of M to Al, and $0<y\leq1\times10^{-2}$; preferably $1\times10^{-5}<y\leq5\times10^{-3}$;

@ represents coating, in the zinc aluminate fluorescent material, M serves as a core, $Al_2O_3$ serves as an intermediate layer shell, and $Zn_{1-x}Al_2O_4:Mn_x$ serves as an outer layer shell.

The notation ":" in the formula $Zn_{1-x}Al_2O_4:Mn_x$ represents doping, i.e., Mn is a dopant, and the divalent Mn ion is the active ion of the fluorescent material. The outer layer shell of $Zn_{1-x}Al_2O_4:Mn_x$ is formed by doping manganese (Mn) into $Zn_{1-x}Al_2O_4$.

Zinc aluminate ($ZnAl_2O_4$) is a wide bandgap semiconductor material having a cubic spinel structure. The polycrystalline powder of $ZnAl_2O_4$ has an optical band gap usually ranging from 318 to 319 eV, which exhibits an excellent chemical stability and thermal stability. The zinc aluminate fluorescent material employs Zinc aluminate ($Zn_{1-x}Al_2O_4$) as a substrate for the outer shell layer, such that it exhibits a higher stability.

As the active ion of the zinc aluminate fluorescent material, the divalent Mn ion allows the fluorescent material to emit green fluorescence when applying the voltage.

As the core of the zinc aluminate fluorescent material, M can produce a surface plasmon resonance effect, which can improve the internal quantum efficiency of the fluorescent material.

In the zinc aluminate fluorescent material, a core-shell structure is formed by coating at least one metal nanoparticles selected from the group consisting of Ag, Au, Pt, Pd, and Cu, since metal nanoparticles can improve the internal quantum efficiency of the fluorescent material, the zinc aluminate fluorescent material exhibits a higher luminous intensity.

Accordingly, this zinc aluminate fluorescent material possesses such advantages as good stability and good luminous performance, which can be widely used in display and lighting fields.

A method of preparing a zinc aluminate fluorescent material includes the following steps:

Step S110, a sol containing M is prepared.

M is at least one metal nanoparticles selected from the group consisting of Ag, Au, Pt, Pd, and Cu.

The step of preparing the sol containing M includes: mixing a salt solution of at least one metal selected from the group consisting of Ag, Au, Pt, Pd, and Cu, with an additive and a reductant, and reacting to obtain the sol containing M. Under the premise of obtaining the sol containing M, the reacting time is preferred between 10 to 45 minutes for saving energy.

The salt solution of Ag, Au, Pt, Pd, or Cu can be chloride solution, nitrate solution and the like of Ag, Au, Pt, Pd, or Cu. The concentration of the solution of Ag, Au, Pt, Pd, or Cu can be determined as required, which preferably ranges from $1\times10^{-3}$ mol/L to $5\times10^{-2}$ mol/L.

The additive is at least one selected from the group consisting of polyvinylpyrrolidone, sodium citrate, cetyl trimethyl ammonium bromide, sodium lauryl sulfate, and sodium dodecyl sulfate. The concentration of the additive in the sol containing M ranges from $1\times10^{-4}$ g/mL to $5\times10^{-2}$ g/mL.

The reductant is at least one selected from the group consisting of hydrazine hydrate, ascorbic acid, sodium citrate, and sodium borohydride. The reductant is first prepared into an aqueous solution having a concentration of $1\times10^{-4}$ mol/L to 1mol/L, and the aqueous solution is then mixed with the salt solution of at least one metal selected from the group consisting of Ag, Au, Pt, Pd, and Cu and the additive to perform reaction.

A mole ratio between the reductant and metal ion of the salt solution of at least one metal selected from the group consisting of Ag, Au, Pt, Pd, and Cu ranges from 3.6:1 to 18:1.

Step S120, the sol containing M is surface-treated, a solution containing $Al^{3+}$ ion is then added. After the mixture solution is well stirred, a precipitating agent is added, the reaction is performed at a temperature of 0°C to 100°C to produce a precipitate. The precipitate is filtrated, then washed, dried and calcined to obtain $Al_2O_3@M$ powder by which M is coated.

To facilitate coating, the sol containing M from step S110 is surface-treated, such that a stable $Al_2O_3@M$ structure, in which M is coated by $Al_2O_3$, can be obtained.

The step of surface-treating the sol containing M includes: adding the sol containing M into an aqueous solution of polyvinyl pyrrolidone having a concentration of 0.005g/mL to 0.01g/mL and stirring for 12 to 24 hours.

The solution containing $Al^{3+}$ ion is selected from the group consisting of aluminum sulfate solution ($Al_2(SO_4)_3$), aluminum nitrate solution ($Al(NO_3)_3$), and aluminum chloride solution ($AlCl_3$).

The precipitating agent is selected from the group consisting of ammonium bicarbonate ($NH_4HCO_3$), ammonia ($NH_3$-$H_2O$), ammonium carbonate ($(NH_4)_2CO_3$), and urea ($CON_2H_4$).

After the sol containing M is surface-treated, the solution containing $Al^{3+}$ ion is then added and well stirred, the precipitating agent is slowly added with stirring, the reaction is performed in a water bath at a temperature of 0°C to 100°C to produce the precipitate. The reaction time is preferably from 1.5 to 5 hours to complete the formation of the precipitate.

$Al^{3+}$ ion can react with the precipitating agent to produce $Al(OH)_3$, which takes a form of colloid. Since the hydroxyls of $Al(OH)_3$ have a high activity, the firstly generated $Al(OH)_3$ colloid can bind metal and coat the metal inside, next, the subsequently generated Al(OH)$_3$ will be deposited on the surface of the colloid particles. The hydroxyl bound to the surface of the colloid particle will be dehydrated and form an Al-O-Al band and binding points. Along with the hydrolysis, Al(OH)$_3$ will continuously bind to the binding points, and an Al$_2$O$_3$ coating layer is formed by dehydration and condensation, such that Al$_2$O$_3$@M is obtained.

Preferably, before adding the precipitating agent, a surfactant is added.

Before adding the surfactant, the sol containing M maintains stable mainly by electrostatic repulsion between particles. The added surfactant can be used to prevent agglomeration of the particles, thus further improving the stability of the particles.

The surfactant can form a molecular film on the surface of the colloid particles to prevent contacting between the particles, and the molecular film can reduce the surface tension and the capillary adsorption, and reduce the steric effect, such that the purpose of preventing agglomeration can be achieved. After the particle is bound with the surfactant, the bonding effect of -OH of the surface of the colloid particles can be reduced, thus further improving the dispersion of the colloid, and reducing the agglomeration of particles. The surfactant is selected from the group consisting of polyethylene glycol (PEG), ethylene glycol (EG), isopropyl alcohol (IPA), and polyvinyl alcohol ($[C_2H_4O]_n$). Preferably, the polyethylene glycol is polyethylene glycol 100-20000 (PEG100-20000), more preferably polyethylene glycol 2000-10000 (PEG2000-10000).

The polyethylene glycol with a molecular weight of 2000 to 10000 has an appropriate viscosity, such that PEG2000-10000 can easily form a strong hydrogen bond with the surface of the particles, and a macromolecular hydrophilic film is formed on the surface of the particles, so that the dispersion particles is improved, and the aggregation of particles is reduced.

Preferably, after the reaction is ended, the precipitate is aged for 1 to 8 hours, such that the generated precipitated crystal particles can grow up, and the precipitate becomes more pure and is easy for separation.

After aging, the precipitate is obtained by filtering. The precipitate is then washed, dried, and calcined at a temperature of 500 to 1200°C for 1 to 8 hours to obtain Al$_2$O$_3$@M powder, which coats M.

Step S130, a Zn compound, an Mn compound, and the Al$_2$O$_3$@M powder are mixed according to a stoichiometric ratio of formula of Zn$_{1-x}$Al$_2$O$_4$:Mn$_x$@Al$_2$O$_3$@M$_y$ to obtain a mixture.

The Zn compound and Mn compound are oxides, carbonates, acetates or oxalates corresponding to Zn and Mn. For example, the Zn compound can be zinc oxide (ZnO), zinc oxalate (ZnC$_2$O$_4$•2H$_2$O), etc.; the Mn compound can be manganese dioxide (MnO$_2$), manganese oxalate (MnC$_2$O$_4$ • 2H$_2$O), and the like.

The Zn compound, the Mn compound, and the Al$_2$O$_3$@M powder are mixed according to a stoichiometric ratio of formula of Zn$_{1-x}$Al$_2$O$_4$:Mn$_x$@Al$_2$O$_3$@M$_y$ to obtain a mixture, which will be used for subsequent reaction.

Step S140, the mixture is ground, heated, reduced, cooled and further ground to obtain the zinc aluminate fluorescent material having the formula: Zn$_{1-x}$Al$_2$O$_4$:Mn$_x$@Al$_2$O$_3$@M$_y$, where $0<x\leq0.1$, y is a mole ratio of M to Al, and $0<y\leq1\times10^{-2}$; @ represents coating, in the zinc aluminate fluorescent material, M serves as a core, Al$_2$O$_3$ serves as an intermediate layer shell, and Zn$_{1-x}$Al$_2$O$_4$:Mn$_x$ serves as an outer layer shell.

The mixture obtained in step S130 is well ground, then is calcined at a temperature of 800°C to 1400°C for 2 to 15 hours. Next, the mixture is reduced under a mixed reducing atmosphere of nitrogen and hydrogen, a carbon reducing atmosphere or a hydrogen reducing atmosphere at a temperature of 1000°C to 1400°C for 0.5 to 6 hours.

After reducing, the mixture is cooled, ground to obtain the zinc aluminate fluorescent material having the formula: Zn$_{1-x}$Al$_2$O$_4$:Mn$_x$@Al$_2$O$_3$@M$_y$.

In the formula, $0<x\leq0.1$, y is a mole ratio of M to Al, and $0<y\leq1\times10^{-2}$; @ represents coating, in the zinc aluminate fluorescent material, M serves as a core, Al$_2$O$_3$ serves as an intermediate layer shell, and Zn$_{1-x}$Al$_2$O$_4$:Mn$_x$ serves as an outer layer shell.

The notation ":" in the formula Zn$_{1-x}$Al$_2$O$_4$:Mn$_x$ represents doping, i.e., Mn is a dopant, and the divalent Mn ion is the active ion of the fluorescent material. The outer layer shell of Zn$_{1-x}$Al$_2$O$_4$:Mn$_x$ is formed by doping manganese (Mn) into Zn$_{1-x}$Al$_2$O$_4$:Mn$_x$.

The forgoing preparing method of the zinc aluminate fluorescent material is simple, low equipment requirement, no pollution, easy to control, and suitable for industrial production.

Detailed examples are described below.

Example 1

This example describes a process of preparation of Zn$_{0.99}$Al$_2$O$_4$:Mn$_{0.01}$@Al$_2$O$_3$@Pd$_{1\times10^{-5}}$ by using high-temperature solid-phase method.

Preparation of sol containing Pd nanoparticles was described below. 0.22mg of palladium chloride (PdCl$_2$ • 2H$_2$O) was dissolved in 19mL of deionized water. After the palladium chloride was fully dissolved, 11.0mg of sodium citrate and 4.0mg of sodium lauryl sulfate were weighed and dissolved into the palladium chloride aqueous solution under magnetic stirring. 3.8mg of sodium borohydride was weighed and dissolved into 10mL of deionized water to obtain a sodium borohydride reducing solution with a concentration of $1\times10^{-2}$mol/L. Under magnetic stirring, 1mL of sodium borohydride solution with a concentration of $1\times10^{-2}$mol/L was fast added to the palladium chloride aqueous solution. After reaction for 20 minutes, 20mL of sol containing Pd nanoparticles was obtained with a Pd content of $5\times10^{-5}$mol/L.

Preparation of $Al_2O_3$@Pd was described below. 0.20g of polyvinylpyrrolidone was dissolved in 4mL of deionized water under a room temperature, 1.2mL of $5\times10^{-5}$mol/L of sol containing Pd nanoparticles was added and stirred for 12 hours, 6mL of 0.5mol/L of $Al_2(SO_4)_3$ solution and 10mL of 10% (V/V) of PEG100 aqueous solution were added with stirring, 20 mL of 2mol/L of urea was then slowly added dropwise. The mixed solution was stirred and reacted in a water bath at 100°C for 2.5 hours , aged for 1 hour, filtered, washed, dried, and heat-treated at 1200°C for 1 hour to obtain $Al_2O_3$@Pd powder.

Preparation of $Zn_{0.99}Al_2O_4$:$Mn_{0.01}$@$Al_2O_3$@$Pd_{1\times10^{-5}}$ was described below. 0.3750g of $ZnC_2O_4$-$2H_2O$, 0.2039g of $Al_2O_3$@Pd, 0.0036g of $MnC_2O_4\cdot2H_2O$ were weighed and placed in an agate mortar, sufficient ground to form well mixed powder. The powder was transferred to a corundum crucible, heated at 1400°C for 2 hours in a muffle furnace. Next, the powder was sintered and reduced at 1400°C in a tube furnace under a weak reducing atmosphere of carbon for 0.5hr, then cooled to room temperature and ground to obtain zinc aluminate fluorescent material of $Zn_{0.99}Al_2O_4$:$Mn_{0.01}$@$Al_2O_3$@$Pd_{1\times10^{-5}}$ coating Pd nanoparticles.

Example 2

This example describes a process of preparation of $Zn_{0.98}Al_2O_4$:$Mn_{0.02}$@$Al_2O_3$@$Au_{1.5\times10^{-4}}$ by using high-temperature solid-phase method.

Preparation of sol containing Au nanoparticles was described below. 2.1mg of chloroauric acid ($AuCl_3 \bullet HCl \bullet 4H_2O$) was dissolved in 16.8mL of deionized water. After the chloroauric acid was fully dissolved, 14mg of sodium citrate and 6mg of cetyl trimethyl ammonium bromide were weighed and dissolved into the chloroauric acid aqueous solution under magnetic stirring. 1.9mg of sodium borohydride and 17.6mg of ascorbic acid were weighed and dissolved into 10mL of deionized water, respectively, to obtain a 10mL of sodium borohydride solution with a concentration of $1\times10^{-2}$mol/L and a 10mL of ascorbic acid solution with a concentration of $1\times10^{-2}$mol/L. Under magnetic stirring, 0.08mL of sodium borohydride solution was firstly added to the chloroauric acid aqueous solution, after stirring for 5 minutes, 3.12 mL of ascorbic acid solution with a concentration of $1\times10^{-2}$mol/L was then added to the chloroauric acid aqueous solution. After reaction for 30 minutes, 20mL of sol containing Au nanoparticles was obtained with an Au content of $5\times10^{-4}$mol/L.

Preparation of $Al_2O_3$@Au was described below. 0.5g of PVP was dissolved in 10mL of deionized water under a room temperature, 10.8mL of $5\times10^{-4}$mol/L of sol containing Au nanoparticles was added and stirred for 24 hours, 6mL of 0.5mol/L of $Al_2(SO_4$ solution and 5mL of 5% (V/V) of PEG20000 aqueous solution were added with stirring, 20 mL of 3mol/L of urea was then slowly added dropwise. The mixed solution was stirred and reacted in a water bath at 80°C for 1.5 hours, aged for 8 hours, filtered, washed, dried, and heat-treated at 800°C for 2 hours to obtain $Al_2O_3$@Au powder.

Preparation of $Zn_{0.98}Al_2O_4$:$Mn_{0.02}$@$Al_2O_3$@$Au_{1.5\times10^{-4}}$ was described below. 0.3073g of $ZnCO_3$, 0.2549g of $Al_2O_3$@Au, 0.0057g of $MnCO_3$ were weighed and placed in an agate mortar, sufficient ground to form well mixed powder. The powder was transferred to a corundum crucible, heated at 800°C for 15 hours in a muffle furnace. Next, the powder was sintered and reduced at 1000°C in a tube furnace under a weak reducing atmosphere of 95%$N_2$+5%$H_2$ for 4 hours, then cooled to room temperature and ground to obtain zinc aluminate fluorescent material of $Zn_{0.98}Al_2O_4$:$Mn_{0.02}$@$Al_2O_3$@$Au_{1.5\times10^{-4}}$ coating Au nanoparticles.

Example 3

This example describes a process of preparation of $Zn_{0.992}Al_2O_4$:$Mn_{0.008}$@$Al_2O_3$@$Ag_{2.5\times10^{-4}}$ by using high-temperature solid-phase method.

Preparation of sol containing Ag nanoparticles was described below. 3.4mg of silver nitrate ($AgNO_3$) was dissolved in 18.4mL of deionized water. After the silver nitrate was fully dissolved, 42mg of sodium citrate was weighed and dissolved into the silver nitrate aqueous solution under magnetic stirring. 5.7mg of sodium borohydride was weighed and dissolved into 10mL of deionized water to obtain a 10mL of sodium borohydride solution with a concentration of $1.5\times10^{-2}$mol/L. Under magnetic stirring, 1.6mL of sodium borohydride solution ($1.5\times10^{-2}$mol/L) was added to the silver nitrate aqueous solution. After reaction for 10 minutes, 20mL of sol containing Ag nanoparticles was obtained with an Ag content of $1\times10^{-3}$mol/L.

Preparation of $Al_2O_3$@Ag was described below. 0.1g of polyvinylpyrrolidone was dissolved in 4mL of deionized water under a room temperature, 3mL of $1\times10^{-3}$mol/L of sol containing Ag nanoparticles was added and stirred for 12 hours, 12mL of 1mol/L of $Al(NO_3)_3$ solution and 6mL of 4% (V/V) of polyvinyl alcohol aqueous solution were added with stirring, $NH_3\cdot H_2O$ was then slowly added dropwise under vigorous stirring until pH=9. The mixed solution was stirred and reacted for 3 hours, aged for 5 hours, filtered, washed, dried, and heat-treated at 900°C for 4 hours to obtain $Al_2O_3$@Ag powder.

Preparation of $Zn_{0.992}Al_2O_4$:$Mn_{0.008}$@$Al_2O_3$@$Ag_{2.5\times10^{-4}}$ was described below. 0.3249g of ZnO, 0.4078g of $Al_2O_3$@Ag, 0.0078g of $Mn(CH_3COO)_2 \cdot 4H_2O$ were weighed and placed in an agate mortar, sufficient ground to form well mixed powder. The powder was transferred to a corundum crucible, heated at 1250°C for 4 hours in a muffle furnace. Next, the powder was sintered and reduced at 1200°C in a tube furnace under a weak reducing atmosphere of $95\%N_2+5\%H_2$ for 2 hours, then cooled to room temperature and ground to obtain zinc aluminate fluorescent material of $Zn_{0.992}Al_2O_4$:$Mn_{0.008}$@$Al_2O_3$@$Ag_{2.5\times10^{-4}}$ coating Ag nanoparticles.

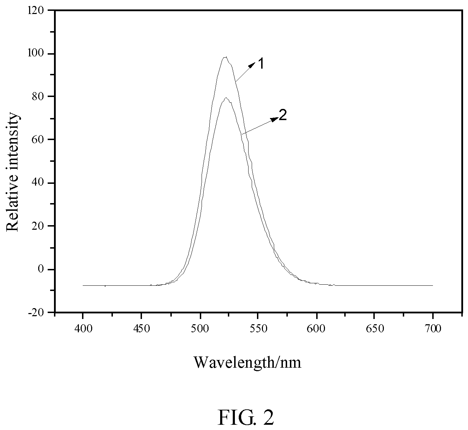

FIG. 2 is a graphical representation of cathodoluminescence spectrum under a voltage of 1.5kV of the zinc aluminate fluorescent material of $Zn_{0.992}Al_2O_4$:$Mn_{0.008}$@$Al_2O_3$@$Ag_{2.5\times10^{-4}}$ coating Ag nanoparticles prepared in accordance with Example 3, and the zinc aluminate fluorescent material of $Zn_{0.992}Al_2O_4$:$Mn_{0.008}$@$Al_2O_3$ without coating metal nanoparticles. It can be seen from FIG. 2 that, at an emission peak of 525nm, the emission intensity of zinc aluminate fluorescent material of $Zn_{0.992}Al_2O_4$:$Mn_{0.008}$@$Al_2O_3$@$Ag_{2.5\times10^{-4}}$ coating Ag nanoparticles is enhanced by 24% comparing to zinc aluminate fluorescent material of $Zn_{0.992}Al_2O_4$:$Mn_{0.008}$@$Al_2O_3$ without coating metal nanoparticles. Accordingly, the zinc aluminate fluorescent material according to Example 3 has a good stability, good color purity and high luminous efficiency.

Example 4

This example describes a process of preparation of $Zn_{0.95}Al_2O_4$:$Mn_{0.05}$@$Al_2O_3$@$Pt_{5\times10^{-3}}$ by using high-temperature solid-phase method.

Preparation of sol containing Pt nanoparticles was described below. 103.6mg of chloroplatinic acid ($H_2PtCl_6 \cdot 6H_2O$) was dissolved in 17mL of deionized water. After the chloroplatinic acid was fully dissolved, 40.0mg of sodium citrate and 60.0mg of sodium lauryl sulfate were weighed and dissolved into the chloroplatinic acid aqueous solution under magnetic stirring. 1.9mg of sodium borohydride was weighed and dissolved into 10mL of deionized water to obtain 10 mL of sodium borohydride aqueous solution with a concentration of $5\times10^{-3}$mol/L. 10mL of hydrazine hydrate solution ($5\times10^{-2}$mol/L) was prepared at the same time. Under magnetic stirring, 0.4mL of sodium borohydride solution was added dropwise to the chloroplatinic acid aqueous solution and stirred for 5 minutes, then 2.6mL of hydrazine hydrate was added dropwise to the chloroplatinic acid aqueous solution. After reaction for 40 minutes, 10mL of sol containing Pt nanoparticles was obtained with a Pt content of $1\times10^{-2}$mol/L.

Preparation of $Al_2O_3$@Pd was described below. 0.30g of polyvinylpyrrolidone (PVP) was dissolved in 5mL of deionized water under a room temperature, 6mL of $1\times10^{-2}$mol/L of sol containing Pt nanoparticles was added and stirred for 18 hours, 12mL of 1mol/L of $AlCl_3$ solution and 5mL of isopropanol were added with stirring, 30 mL of 4mol/L of $NH_4HCO_3$ was then slowly added dropwise. The mixed solution was stirred and reacted for 5 hours, aged for 4 hours, filtered, washed, dried, and heat-treated at 500°C for 8 hour to obtain $Al_2O_3$@Pt powder.

Preparation of $Zn_{0.95}Al_2O_4$:$Mn_{0.05}$@$Al_2O_3$@$Pt_{5\times10^{-3}}$ was described below. 0.8341g of $Zn(CH_3COO)_2 \cdot 2H_2O$, 0.4078g of $Al_2O_3$@Pt, 0.0490g of $Mn(CH_3COO)_2 \cdot 4H_2O$ were weighed and placed in an agate mortar, sufficient ground to form well mixed powder. The powder was transferred to a corundum crucible, heated at 1100°C for 10 hours in a muffle furnace. Next, the powder was sintered and reduced at 1000°C in a tube furnace under a $H_2$ reducing atmosphere for 6 hours, then cooled to room temperature and ground to obtain zinc aluminate fluorescent material of $Zn_{0.95}Al_2O_4$:$Mn_{0.05}$@$Al_2O_3$@$Pt_{5\times10^{-3}}$ coating Pt nanoparticles.

Example 5

This example describes a process of preparation of $Zn_{0.999}Al_2O_4$:$Mn_{0.001}$@ $Al_2O_3$@$Cu_{1\times10^{-4}}$ by using high-temperature solid-phase method.

Preparation of sol containing Cu nanoparticles was described below. 2.4mg of copper nitrate was dissolved in 16mL of ethanol. After the copper nitrate was fully dissolved, 12mg of PVP was added with stirring. 0.4mg of sodium borohydride was dissolved into 10mL of ethanol to obtain a sodium borohydride alcoholic solution with a concentration of $1\times10^{-3}$mol/L. 4mL of sodium borohydride alcoholic solution was added dropwise to the copper nitrate solution. After stirring and reacting for 10 minutes, 20mL of sol containing Cu nanoparticles was obtained with a Cu content of $6\times10^{-4}$mol/L.

Preparation of $Al_2O_3$@Cu was described below. 0.18g of PVP was dissolved in 8mL of deionized water under a room temperature, 2mL of $6\times10^{-4}$mol/L of sol containing Cu nanoparticles was added and stirred for 24 hours, 6mL of 2mol/L of $AlCl_3$ solution and 8mL of 5% (V/V) of PEG10000 were added with stirring, 15 mL of 3mol/L of $NH_4HCO_3$ was then slowly added dropwise. The mixed solution was stirred and reacted in a 60°C water bath for 5 hours, aged for 3 hours, filtered, washed, dried, and heat-treated at 600°C for 6 hours to obtain $Al_2O_3$@Cu powder.

Preparation of $Zn_{0.999}Al_2O_4$:$Mn_{0.001}$@$Al_2O_3$@$Cu_{1\times10^{-4}}$ was described below. 0.3252g of ZnO, 0.4078g of

$Al_2O_3$@Cu, 0.0009g of $Mn(CH_3COO)_2$-4$H_2O$ were weighed and placed in an agate mortar, sufficient ground to form well mixed powder. The powder was transferred to a corundum crucible, heated at 1100°C for 10 hours in a muffle furnace. Next, the powder was sintered and reduced at 1000°C in a tube furnace under a 95%+5%$H_2$ reducing atmosphere for 6 hours, then cooled to room temperature and ground to obtain zinc aluminate fluorescent material of $Zn_{0.999}Al_2O_4$:$Mn_{0.001}$@ $Al_2O_3$@$Cu_{1\times10}$-4 coating Cu nanoparticles.

Example 6

This example describes a process of preparation of $Zn_{0.9}Al_2O_4$:$Mn_{0.1}$@$Al_2O_3$@$(Ag_{0.5}/Au_{0.5})_{1.25\times10}$-3 by using high-temperature solid-phase method.

Preparation of sol containing $Ag_{0.5}/Au_{0.5}$ nanoparticles was described below. 6.2mg of chloroauric acid ($AuCl_3$•HCl•4$H_2O$) and 2.5mg of $AgNO_3$ were dissolved in 28mL of deionized water. After they were fully dissolved, 22mg of sodium citrate and 20mg of PVP were weighed and added to the mixture solution under magnetic stirring. 5.7mg of sodium borohydride was dissolved into 10mL of deionized water to obtain a sodium borohydride aqueous solution with a concentration of $1.5\times10^{-2}$mol/L. 2mL of sodium borohydride aqueous solution ($1.5\times10^{-2}$mol/L) was added to the mixture solution. After stirring and reacting for 20 minutes, 30mL of sol containing $Ag_{0.5}/Au_{0.5}$ nanoparticles was obtained with a sum metal (Ag+Au) content of $1\times10^{-3}$mol/L.

Preparation of $Al_2O_3$@($Ag_{0.5}/Au_{0.5}$) was described below. 0.25g of PVP was dissolved in 6mL of deionized water under a room temperature, 10mL of $1\times10^{-3}$mol/L of sol containing $Ag_{0.5}/Au_{0.5}$ nanoparticles was added and stirred for 24 hours, 8mL of 1mol/L of $AlCl_3$ solution and 5mL of glycol were added with stirring, 20 mL of 5mol/L of $(NH_4)_2CO_3$ was then slowly added dropwise. The mixed solution was stirred and reacted in a 70°C water bath for 3 hours, aged for 2 hours, filtered, washed, dried, and heat-treated at 900°C for 3 hours to obtain $Al_2O_3$@($Ag_{0.5}/Au_{0.5}$) powder.

Preparation of $Zn_{0.9}Al_2O_4$:$Mn_{0.1}$@$Al_2O_3$@$(Ag_{0.5}/Au_{0.5})_{1.25\times10}$-3 was described below. 0.2930g of ZnO, 0.4078g of $Al_2O_3$@($Ag_{0.5}/Au_{0.5}$), 0.0347g of $MnO_2$ were weighed and placed in an agate mortar, sufficient ground to form well mixed powder. The powder was transferred to a corundum crucible, heated at 1000°C for 15 hours in a muffle furnace. Next, the powder was sintered and reduced at 1000°C in a tube furnace under a 95%+5%$H_2$ reducing atmosphere for 4 hours, then cooled to room temperature and ground to obtain zinc aluminate fluorescent material of $Zn_{0.9}Al_2O_4$:$Mn_{0.1}$@$Al_2O_3$@$(Ag_{0.5}/Au_{0.5})_{1.25\times10}$-3 coating Ag/Au nanoparticles.

**Claims**

1. A zinc aluminate fluorescent material, having a formula: $Zn_{1-x}Al_2O_4$:$Mn_x$@$Al_2O_3$@$M_y$ wherein M is at least one metal nanoparticles selected from the group consisting of Ag, Au, Pt, Pd, and Cu;

$$0 < x \leq 0.1;$$

y is a mole ratio of M to Al, and $0 < y \leq 1\times10^{-2}$;
@ represents coating, in the zinc aluminate fluorescent material, M serves as a core, $Al_2O_3$ serves as an intermediate layer shell, and $Zn_{1-x}Al_2O_4$:$Mn_x$ serves as an outer layer shell.

2. The zinc aluminate fluorescent material according to claim 1, wherein $0.001 \leq x \leq 0.005$.

3. The zinc aluminate fluorescent material according to claim 1, wherein $1\times10^{-5} \leq y \leq 5\times10^{-3}$.

4. A method of preparing a zinc aluminate fluorescent material, comprising the following steps:

   (S110) preparing a sol containing M, wherein M is at least one metal nanoparticles selected from the group consisting of Ag, Au, Pt, Pd, and Cu;
   (S120) surface-treating the sol containing M, adding a solution containing $Al^{3+}$ ion, stirring and adding a precipitating agent, reacting at a temperature of 0°C to 100°C to produce a precipitate, filtrating the precipitate, then washing, drying and calcining the precipitate to obtain $Al_2O_3$@M powder which coating M;
   (S130) mixing a Zn compound, an Mn compound, and the $Al_2O_3$@M powder according to a stoichiometric ratio of formula of $Zn_{1-x}Al_2O_4$:$Mn_x$@$Al_2O_3$@$M_y$ to obtain a mixture; and
   (S140) grinding the mixture, heating the mixture, reducing the mixture, cooling and further grinding the mixture to obtain the zinc aluminate fluorescent material having the formula: $Zn_{1-x}Al_2O_4$:$Mn_x$@$Al_2O_3$@$M_y$;

wherein $0<x\leq0.1$, y is a mole ratio of M to Al, and $0<y\leq1\times10^{-2}$; @ represents coating, in the zinc aluminate fluorescent material, M serves as a core, $Al_2O_3$ serves as an intermediate layer shell, and $Zn_{1-x}Al_2O_4:Mn_x$ serves as an outer layer shell.

5. The method according to claim 4, wherein the step (S110) of preparing the sol containing M comprises:

> mixing a salt solution of at least one metal nanoparticles selected from the group consisting of Ag, Au, Pt, Pd, and Cu, with an additive and a reductant, and reacting for 10 to 45 minutes to obtain the sol containing M;
> wherein the concentration of the salt solution of at least one metal selected from the group consisting of Ag, Au, Pt, Pd, and Cu ranges from $1\times10^{-3}$ mol/L to $5\times10^{-2}$ mol/L;
> the additive is at least one selected from the group consisting of polyvinylpyrrolidone, sodium citrate, cetyl trimethyl ammonium bromide, sodium lauryl sulfate, and sodium dodecyl sulfate;
> the concentration of the additive in the sol containing M ranges from $1\times10^{-4}$ g/mL to $5\times10^{-2}$ g/mL;
> the reductant is at least one selected from the group consisting of hydrazine hydrate, ascorbic acid, sodium citrate, and sodium borohydride;
> a mole ratio between the reductant and metal ion of the salt solution of at least one metal selected from the group consisting ofAg, Au, Pt, Pd, and Cu ranges from 3.6:1 to 18:1.

6. The method according to claim 4, wherein the step of surface-treating (S120) the sol containing M comprises: adding the sol containing M into an aqueous solution of polyvinyl pyrrolidone having a concentration of 0.005g/mL to 0.01g/mL and stirring for 12 to 24 hours.

7. The method according to claim 4, further comprising a step of adding a surfactant after stirring and before adding the precipitating agent.

8. The method according to claim 7, wherein the solution containing $Al^{3+}$ ion is selected from the group consisting of aluminum sulfate solution, aluminum nitrate solution, and aluminum chloride solution; the surfactant is selected from the group consisting of polyethylene glycol, ethylene glycol, isopropyl alcohol, and polyvinyl alcohol; the precipitating agent is selected from the group consisting of ammonium bicarbonate, ammonia, ammonium carbonate, and urea.

9. The method according to claim 4, further comprising a step of aging the precipitate for 1 to 8 hours before filtrating the precipitate.

10. The method according to claim 4, wherein the step of calcining the precipitate comprises: calcining the precipitate at a temperature of 500°C to 1200°C for 1 to 8 hours.

11. The method according to claim 4, wherein the step of heating the mixture comprises: calcining the mixture at a temperature of 800°C to 1400°C for 2 to 15 hours.

12. The method according to claim 4, wherein the step of reducing the mixture comprises: heating the mixture under a mixed reducing atmosphere of nitrogen and hydrogen, a carbon reducing atmosphere or a hydrogen reducing atmosphere at a temperature of 1000°C to 1400°C for 0.5 to 6 hours.

**Patentansprüche**

1. Ein fluoreszierendes Zinkaluminat-Material mit der Formel: $Zn_{1-x}Al_2O_4:Mn_x@Al_2O_3:@M_y$, worin M mindestens ein Metall-Nanopartikel, die aus der aus Ag, Au, Pt, Pd und Cu bestehenden Gruppe ausgewählt wird, ist;

$$0<x\leq0,1;$$

y ist das Moleverhältnis von M zu Al, und $0<y<1 \times 10^{-2}$,
@ repräsentiert die Beschichtung, im fluoreszierendes Zinkaluminat-Material dient M als Kern, $Al_2O_3$ dient als Zwischenlage und $Zn_{1-x}Al_2O_4:Mn_x$ dient als Außenschicht.

2. Fluoreszierendes Zinkaluminat-Material gemäß Anspruch 1, worin $0,001 \leq x\leq0,005$.

3. Fluoreszierendes Zinkaluminat-Material gemäß Anspruch 1, worin $1 \times 10^{-5} \leq y \leq 5 \times 10^{-3}$

4. Verfahren zur Herstellung eines fluoreszierenden Zinkaluminat-Material, das die folgenden Schritte umfasst:

(S110) Vorbereitung eines Sols, das M enthält, wobei M mindestens ein Metall-Nanopartikel, die aus der aus Ag, Au, Pt, Pd und Cu bestehenden Gruppe ausgewählt wird;

(S120) Oberflächenbehandlung des M-enthaltenden Sols, Zugabe einer $Al^{-3+}$ - Ionen enthaltenden Lösung, Umrühren und Zugabe eines Fällungsmittels, das bei einer Temperatur zwischen 0°C und 100°C reagiert, um ein Präzipitat zu erzeugen, Filterung des Präzipitat, dann Waschen, Trocknen und Kalzinieren, um $Al_2O_3@M$ - Pulver mit M-Beschichtung zu erhalten;

(S130) Mischen einer Zn-Verbindung, eine Mn-Verbindung und das $Al_2O_3@M$ - Pulver gemäß einem stöchiometrischen Verhältnis nach der Formel $Zn_{1-x}Al_2O_4:Mn_x@ Al_2O_3@M$ um eine Mischung zu erhalten; und

(S140) Mahlen der Mischung, Erhitzen der Mischung, Reduzieren der Mischung, Kühlen und erneutes Mahlen der Mischung, um das fluoreszierende Zinkaluminat - Material mit der Mischung: $Zn_{1-x}Al_2O_4:Mn_x@Al_2O_3:@M_y$ zu erhalten;

worin $0<x\leq0,1$, y ein Molverhältnis von M zu Al ist und $0<y\leq1 \times 10^{-2}$; @ die Beschichtung repräsentiert, im fluoreszierendes Zinkaluminat - Material M als Kern dient, $Al_2O_3$ als Zwischenlage dient und $Zn_{1-x}Al_2O_4:Mn_x$ als Außenschicht dient.

5. Verfahren gemäß Anspruch 4, wobei der Schritt (S110) der Oberflächenbehandlung des M-enthaltenden Sols umfasst:

Mischen einer Salzlösung mit Nanoteilchen mindestens eines Metalls, das aus der aus Ag, Au, Pt, Pd und Cu bestehenden Gruppe ausgewählt wird, mit einem Zusatz und einem Reduktionsmittel und 10 bis 45 Minuten dauernde Reaktion, um das M-enthaltende Sol zu erhalten;

wobei die Konzentration der Salzlösung des mindestens einen Metalls, das aus der aus Ag, Au, Pt, Pd und Cu bestehenden Gruppe ausgewählt wird, zwischen $1 \times 10^{-3}$ mol/L und $5 \times 10^{-2}$ mol/L liegt;

bei dem Zusatz handelt es sich um mindestens einen Stoff, der aus der aus Polyvinylpyrrolidon, Natriumcitrat, Cetyl- Trimethyl - Ammoniumbromid, Natriumlaurylsulfat, und Natriumdodecylsulfat bestehenden Gruppe ausgewählt wird;

die Konzentration des Zusatzes im M- enthaltenden Sol liegt zwischen $1 \times 10^{-4}$ g/L und $5 \times 10^{-2}$ g/L;

beim Reduktionsmittel handelt es sich um mindestens ein Mittel, das aus der aus Hydrazinhydrat, Ascorbinsäure, Natriumcitrat, und Natriumborhydrid bestehenden Gruppe ausgewählt wird;

das Molverhältnis zwischen dem Reduktionsmittel und dem Metallion der Salzlösung mindestens eines Metalls, das aus der aus Ag, Au, Pt, Pd und Cu bestehenden Gruppe ausgewählt wird, liegt zwischen 3.6:1 und 18:1.

6. Verfahren gemäß Anspruch 4, wobei der Schritt (S120) der Oberflächenbehandlung des M - enthaltenden Sols umfasst: Zugabe des M - enthaltenden Sols in eine wässrige Lösung aus Polyvinyl-Pyrrolidon mit einer Konzentration von 0,005g/mL bis 0,01 g/mL und Rühren während 12 bis 24 Stunden.

7. Verfahren gemäß Anspruch 4, das weiterhin den Schritt der Zugabe eines Tensids nach dem Rühren und vor Zugabe des Fällungsmittels umfasst.

8. Verfahren gemäß Anspruch 7, wobei die $A^{3+}$ - Ionen enthaltende Lösung aus der aus Aluminumsulfat-Lösung, Aluminumnitrat-Lösung und Aluminumchlorid-Lösung bestehenden Gruppe ausgewählt wird ; wobei das Tensid aus der aus Polyethylenglykol, Ethylenglykol, Isopropylalkohol und Polyvinylalkohol bestehenden Gruppe ausgewählt wird ; wobei das Fällungsmittel aus der aus Ammoniumbikarbonat, Ammoniak, Ammoniumkarbonat und Harnstoff bestehenden Gruppe ausgewählt wird.

9. Verfahren gemäß Anspruch 4, das weiterhin einen Schritt zur Alterung des Präzipitats während 1 bis 8 Stunden vor Filterung des Präzipitats umfasst.

10. Verfahren gemäß Anspruch 4, wobei der Schritt der Kalzinierung des Präzipitats umfasst: Kalzinierung des Präzipitats bei einer Temperatur von 500°C bis 1200°C, 1 bis 8 Stunden lang.

11. Verfahren gemäß Anspruch 4, wobei der Schritt der Erhitzung der Mischung umfasst: Kalzinierung der Mischung bei einer Temperatur von 800°C bis 1400°C, 2 bis 15 Stunden lang.

12. Verfahren gemäß Anspruch 4, wobei der Schritt der Erhitzung der Mischung umfasst: Erhitzung der Mischung in einer gemischten reduzierenden Atmosphäre aus Stickstoff und Wasserstoff, einer Kohlenstoff - reduzierenden Atmosphäre oder einer Wasserstoff -reduzierende Atmosphäre, bei einer Temperatur von 1000°C bis 1400°C, 0,5 bis 6 Stunden lang.

## Revendications

1. Matériau fluorescent d'aluminate de zinc, ayant une formule : $Zn_{1-x}Al_2O_4:Mn_x@Al_2O_3@M_y$ dans lequel M est au moins une nanoparticule de métal sélectionnée dans le groupe composé de Ag, Au, Pt, Pd et Cu ;

$$0 < x \leq 0,1 \; ;$$

y est un ratio molaire de M sur Al, et $0 < y \leq 1 \times 10^{-2}$ ;
@ représente la couche, dans le matériau fluorescent d'aluminate de zinc, M sert de noyau, $Al_2O_3$ sert d'enveloppe de couche intermédiaire, et $Zn_{1-x}Al_2O_3:Mn_x$ sert d'enveloppe de couche extérieure.

2. Matériau fluorescent d'aluminate de zinc selon la revendication 1, dans lequel $0,001 \leq x \leq 0,005$.

3. Matériau fluorescent d'aluminate de zinc selon la revendication 1, dans lequel $1 \times 10^{-5} \leq y \leq 5 \times 10^{-3}$.

4. Procédé de préparation d'un matériau fluorescent d'aluminate de zinc, comprenant les étapes suivantes :

(S110) préparation d'un sol contenant M, dans lequel M est au moins une nanoparticule de métal sélectionnée parmi le groupe composé de Ag, Au, Pt, Pd et Cu ;
(S120) traitement de surface du sol contenant M, en ajoutant une solution contenant l'ion $Al^{3+}$, agitation et ajout d'un agent de précipitation, réaction à une température de 0°C à 100°C pour produire un précipité, filtrage du précipité, puis lavage, séchage et calcination du précipité pour obtenir de la poutre $Al_2O_3@M$ dont le revêtement M ;
(S130) mélange d'un composé Zn, d'un composé Mn, et de la poudre $Al_2O_3@M$ selon un ratio stoechiométrique de la formule de $Zn_{1-x}Al_2O_4:Mn_x@Al_2O_3@M_y$ pour obtenir un mélange ;
et
(S 140) broyage du mélange, chauffage du mélange, réduction du mélange, refroidissement et de nouveau broyage du mélange pour obtenir le matériau fluorescent d'aluminate de zinc ayant la formule : $Zn_{1-x}Al_2O_4:Mn_x@Al_2O_3@M_y$ ;
dans lequel $0 < x \leq 0,1$, y est un ratio molaire de M sur Al, et $0 < y \leq 1 \times 10^{-2}$ ; @ représente la couche, dans le matériau fluorescent d'aluminate de zinc, M sert de noyau, $Al_2O_3$ sert d'enveloppe de couche intermédiaire, et $Zn_{1-x}Al_2O_4:Mn_x$ sert d'enveloppe de couche extérieure.

5. Procédé selon la revendication 4, dans lequel l'étape (S110) de préparation de sol contenant M comprend :

le mélange d'une solution saline d'au moins une nanoparticule de métal sélectionnée dans le groupe composé de Ag, Au, Pt, Pd et Cu, avec un additif et un réductant, et réaction pendant 10 à 45 minutes pour obtenir le sol contenant M ;
dans lequel la concentration de la solution saline d'au moins un métal sélectionné parmi le groupe composé de Ag, Au, Pt, Pd et Cu va de $1 \times 10^{-3}$ mol/L à $5 \times 10^{-2}$ mol/L ; l'additif est au moins un sélectionné parmi le groupe composé de la polyvinylpyrrolidone, du citrate de sodium, du bromure d'ammonium triméthyl cétyl, du laurylsulfate de sodium et du dodécylsulfate de sodium ;
la concentration de l'additif dans le sol contenant M va de $1 \times 10^{-4}$ g/mL à $5 \times 10^{-2}$ g/mL ;
le réductant est au moins un sélectionné parmi le groupe composé de l'hydrate d'hydrazine, de l'acide ascorbique, du citrate de sodium et du borohydrure de sodium ;
un ratio molaire entre le réductant et l'ion métal de la solution saline d'au moins un métal sélectionné dans le groupe composé de Ag, Au, Pt, Pd et Cu va de 3,6:1 à 18:1.

6. Procédé selon la revendication 4, dans lequel l'étape de traitement de surface (S120) du sol contenant M comprend :
l'ajout du sol contenant M dans une solution aqueuse de la polyvinylpyrrolidone ayant une concentration de 0,005g/mL à 0,01g/mL et le remuage pendant 12 à 24 heures.

7.  Procédé selon la revendication 4, comprenant en outre une étape d'ajout d'un surfactant après remuage et avant ajout de l'agent précipitant.

8.  Procédé selon la revendication 7, dans lequel la solution contenant l'ion $Al^{3+}$ est sélectionnée dans le groupe composé de la solution de sulfate d'aluminium, de la solution de nitrate d'aluminium et de la solution de chlorure d'aluminium ; le surfactant est sélectionné dans le groupe composé du polyéthylène glycol, de l'éthylène glycol, de l'alcool isopropylique, et de l'alcool polyvinylique ; l'agent précipitant est sélectionné dans le groupe composé du bicarbonate d'ammonium, de l'ammoniaque, du carbonate d'ammonium et de l'urée.

9.  Procédé selon la revendication 4, comprenant en outre une étape de vieillissement du précipité pendant 1 à 8 heures avant filtration du précipité.

10. Procédé selon la revendication 4, dans lequel l'étape de calcination du précipité comprend : la calcination du précipité à une température de 500°C à 1200°C pendant 1 à 8 heures.

11. Procédé selon la revendication 4, dans lequel l'étape de chauffage du mélange comprend : la calcination du mélange à une température de 800°C à 1400°C pendant 2 à 15 heures.

12. Procédé selon la revendication 4, dans lequel l'étape de réduction du mélange comprend : le chauffage du mélange sous une atmosphère réductrice mixte d'azote et d'hydrogène, une atmosphère réductrice de carbone ou une atmosphère réductrice d'hydrogène à une température de 1000°C à 1400°C pendant 0,5 à 6 heures.

preparing a sol containing M —S110

surface-treating the sol containing M, adding a solution containing $Al^{3+}$ ion, stirring and adding a precipitating agent, reacting at a temperature of 0°C to 100°C to produce a precipitate, filtrating the precipitate, then washing, drying and calcining the precipitate to obtain $Al_2O_3@M$ powder which coating M —S120

mixing a Zn compound, an Mn compound, and the $Al_2O_3@M$ powder according to a stoichiometric ratio of formula of $Zn_{1-x}Al_2O_4{:}Mn_x@Al_2O_3@M_y$ to obtain a mixture —S130

grinding the mixture, heating the mixture, reducing the mixture, cooling and further grinding the mixture to obtain the zinc aluminate fluorescent material having the formula: $Zn_{1-x}Al_2O_4{:}Mn_x@Al_2O_3@M_y$;
  wherein $0<x\leq0.1$, y is a mole ratio of M to Al, and $0<y\leq1\times10^{-2}$; @ represents coating, in the zinc aluminate fluorescent material, M serves as a core, $Al_2O_3$ serves as an intermediate layer shell, and $Zn_{1-x}Al_2O_4{:}Mn_x$ serves as an outer layer shell —S140

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102234512